Europäisches Patentamt

European Patent Office

Office européen des brevets

(11) Publication number: **0 338 859 B1**

# EUROPEAN PATENT SPECIFICATION

(45) Date of publication of patent specification: **12.01.94**     (51) Int. Cl.⁵: **G02F 1/09**, G02F 1/00,
H01F 10/24

(21) Application number: **89304010.5**

(22) Date of filing: **21.04.89**

(54) Faraday rotator.

(30) Priority: **22.04.88 JP 98180/88**

(43) Date of publication of application:
**25.10.89 Bulletin 89/43**

(45) Publication of the grant of the patent:
**12.01.94 Bulletin 94/02**

(84) Designated Contracting States:
**DE FR GB**

(56) References cited:
**EP-A- 0 086 387**
**DE-A- 2 355 852**

**APPLIED OPTICS, vol. 27, no. 7, 1st April
1988, pages 1329-1333, Optical Society of
America, New York, US; K. MATSUDA et al.:
"Temperature-stabilized optical isolator for
collimated light using
(BiLuGd)3Fe5O12/(BiGd)3(FeGa)5O12 com-
posite film"**

(73) Proprietor: **MITSUBISHI GAS CHEMICAL COM-
PANY, INC.**
**5-2, Marunouchi 2-chome**
**Chiyoda-Ku**
**Tokyo, 100(JP)**

(72) Inventor: **Shirai, Kazushi Central Research
Inst. Mitsubishi**
**Gas Chemical Co. Inc.**
**1-1, Shinjuku 6-chome**
**Katsushika-ku Tokyo(JP)**
Inventor: **Tagami, Yasunori Central Research
Inst. Mitsubishi**
**Gas Chemical Co. Inc.**
**1-1, Shinjuku 6-chome**
**Katsushika-ku Tokyo(JP)**
Inventor: **Takeda, Norio Central Research
Inst. Mitsubishi**
**Gas Chemical Co. Inc.**
**1-1, Shinjuku 6-chome**
**Katsushika-ku Tokyo(JP)**
Inventor: **Arii, Mitsuzo Central Research Inst.
Mitsubishi**
**Gas Chemical Co. Inc.**
**1-1, Shinjuku 6-chome**
**Katsushika-ku Tokyo(JP)**

(74) Representative: **Senior, Alan Murray et al**
**J.A. KEMP & CO**
**14 South Square**
**Gray's Inn**
**London WC1R 5EU (GB)**

## Description

Laser diodes are widely used as a coherent light source for light-applied apparatus and optical communication. However, there is a problem when beams emitted from a laser diode are reflected by an optical system; the reflected beams make oscillation of the laser diode unstable. Therefore, an optical isolator is used in order to prevent the reflected beams from returning from the optical system to the laser diode by blocking the reflected beams.

The optical isolator is generally composed of a polarizer, an analyzer, a Faraday rotator and a magnet to arrange the magnetization direction of the Faraday rotator. As a material of the Faraday rotator, bulk single crystals of yttrium iron garnet (YIG) have been conventionally used. However, there have been many reports recently on bismuth-substituted rare-earth iron garnet single crystal thick films having a Faraday rotation coefficient several times larger than that of YIG and obtained according to mass-producible liquid phase epitaxy (LPE).

For example, $(GdBi)_3 (FeAlGa)_5 O_{12}$ is described in "Report of Academic Lectures in No. 8 Japan Applied Magnetism Society", 1984, page 31, and $(GdLuBi)_3 Fe_5 O_{12}$ in "Japan Applied Magnetism Society Report", Vol. 10, No. 2, 1986, pages 143-146.

In general, however, the thermal change ratio of the Faraday rotation angle in bismuth-substituted rare-earth iron garnet is comparatively large. Therefore, when a film of the bismuth-substituted rare-earth iron magnetic garnet is used in a Faraday rotator in an optical isolator, the Faraday rotation angle changes due to a change in an ambient temperature to cause a problem that the optical isolator performance is degraded.

In case of the above $(GdLuBi)_3 Fe_5 O_{12}$, the deviation angle from 45 degrees of the Faraday rotation angle per 1°C of temperature, for example, in the 1.3μm band is 0.06 deg/°C. In conversion of this value to an isolation according to the following equation, when an isolator set to work at 25°C is used at 50°C, the performance in isolation is largely degraded to as low as 32 dB since the deviation $\Delta \theta$ of the rotation angle of the Faraday rotator from the 45 degrees is 1.5 degrees.

$$I_s = 10 \times \log(1/\sin^2(\Delta\theta))$$

wherein $I_s$ represents an isolation, and $\Delta \theta$ is a deviation of the Faraday rotation angle from 45 degrees.

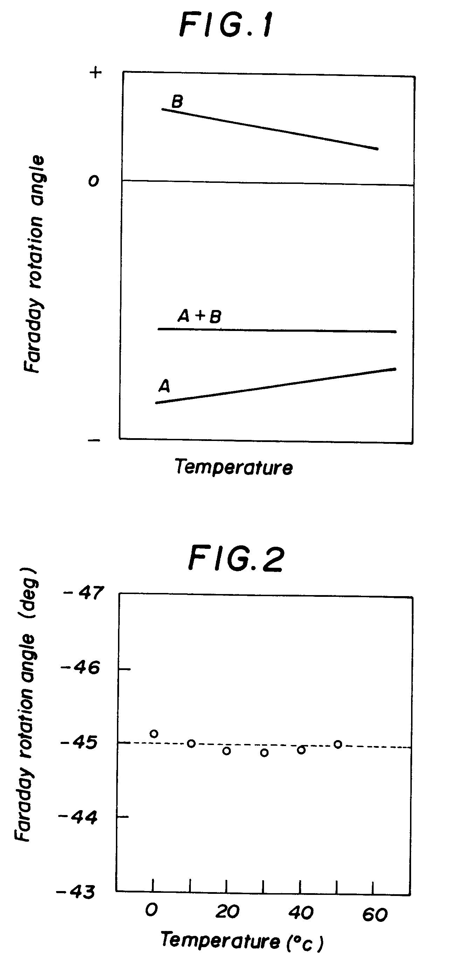

Accordingly, in order to improve the above thermal property, there is a method of combined use of a magnetic garnet film having a negative Faraday rotation angle and a magnetic garnet film having a positive Faraday rotation angle. That is, the combination of a garnet film having a negative Faraday rotation angle as shown by line (A) in Figure 1 with a garnet film having a positive Faraday rotation angle as shown by line (B) in Figure 1 achieves $\Delta \theta = 0$ against temperatures in a certain temperature range, as is shown by (A) + (B) in the Figure, and it is made possible to obtain a Faraday rotator having a stable property against temperatures.

However, as can be understood from Figure 1, when films having Faraday rotation angles of different signs are used in combination, the resultant film thickness is required to be considerably thicker than the thickness of a single film in order to obtain a Faraday rotation angle of 45 degrees due to offsetting of the Faraday rotation angles.

For example, "Journal of the Magnetics Society of Japan" No. 11, page 357, et seq., reports a double epitaxial film consisting of $(GdLuBi)_3 Fe_5 O_{12}$ having a negative Faraday rotation angle and $(GdBi)_3 (FeGa)_5 O_{12}$ having a positive Faraday rotation angle, in which the thicknesses of $(GdLuBi)_3 Fe_5 O_{12}$ and $(GdBi)_3 (feGa)_5 O_{12}$ films, in case of a wavelength of 1.55μm, are reportedly 618μm and 272μm, respectively, in order to achieve $\Delta \theta = 0$ at a temperature in the range between 0 and 50°C.

Meanwhile, the film thickness necessary to obtain a Faraday rotation angle of 45 degrees by the use of $(GdLuBi)_3 Fe_5 O_{12}$ alone is 493μm. Therefore, as compared therewith, the thickness of one or both of the films is required to be much thicker in case of combining the films having different signs as mentioned above.

On the other hand, in the LPE method, as the film thickness increases, the crystal defect increases. Therefore, it is difficult to form films having a thickness of more than 500μm, and a low yield of products results.

It is an aim of this invention to provide a Faraday rotator of which the Faraday rotation angle does not depend on temperature but is substantially constant.

It is another aim of this invention to provide a Faraday rotator of which the deviation angle $\Delta \theta$ does not depend on temperature but is substantially zero.

It is another aim of this invention to provide a Faraday rotator of which the deviation angle $\Delta\theta$ is substantially zero in the predetermined temperature range.

It is further another aim of this invention to provide a Faraday rotator which comprises a combination of films of specific compounds having a positive Faraday rotation angle and a negative Faraday rotation angle, respectively, whereby the Faraday rotation angle is substantially constant without depending on temperature.

It is yet another aim of this invention to provide a Faraday rotator comprising a combination of films of specific compounds capable of accomplishing the above objects by a thickness in such a thickness range as to produce good-quality single crystal films.

According to the present invention there is provided a Faraday rotor comprising

a film of a compound having a negative Faraday rotation angle and represented by formula (1)

$$Ho_{3-x-y}Tb_xBi_yFe_5O_{12} \qquad (1)$$

wherein x is in the range of $0.4 \leq x \leq 0.8$ and y is in the range of $1.1 \leq y \leq 1.5$
and

a film of a compound having a positive Faraday rotation angle and represented by formula (2)

$$Gd_{3-v}Bi_vFe_{5-w}Ga_wO_{12} \qquad (2)$$

wherein v is in the range of $0.6 \leq v \leq 1.1$ and w is in the range of $1.1 \leq w \leq 1.6$, the films being arranged such that said Faraday rotator has a substantially constant Faraday rotation angle in a predetermined temperature range owing to the counter action of the thermal dependencies of Faraday rotation angles of the two films.

The invention will be further described hereinafter with reference to the following detailed description of exemplary enbodiments and the accompanying drawings, in which:

Figure 1 shows the principle of this invention. Figure 2 shows a temperature dependency of the Faraday rotation angle of a double epitaxial film composed of $Ho_{1.2}Tb_{0.6}Bi_{1.2}Fe_5O_{12}$ and $Gd_{2.3}Bi_{0.7}Fe_{3.8}Ga_{1.2}O_{12}$.

The present inventors have made a diligent study in order to overcome the above problems, and found that $\Delta\theta = 0$, i.e., the deviation angle from the 45 degree Faraday rotation angle = zero, can be achieved in the temperature range between 0 and 50°C by combining a film (garnet) of $Ho_{3-x-y}Tb_xBi_yFe_5O_{12}$ having a negative Faraday rotation angle with a film of $Gd_{3-v}Bi_vFe_{5-w}Ga_wO_{12}$ having a positive Faraday rotation angle. In this case, the film thicknesses are not more than $500\mu m$, and it is therefore possible to produce a good quality single crystal film according to LPE method.

The properties required of a film A in Figure 1 are that the sign of its Faraday rotation coefficient $(\theta_F)$ is minus, that the absolute value $(|\theta_F|)$ is large and that its temperature dependence is small. Ho-Tb-Bi-iron garnet $(Ho_{3-x-y}Tb_xBi_yFe_5O_{12})$ has been selected as a film (garnet) meeting the above requirements.

As the proportion of Ho having a smaller ionic radius than that of Tb is increased, the proportion of Bi having a larger ionic radius can be increased for substitution. As a result, it is made possible to increase the $(|\theta_F|)$. However, if the proportion of Ho is increased relative to Tb, a crystal defect called "pit" comes increasingly to conspicuous existence to cause a lower yield of products.

It is preferable that the proportion y of substituted Bi is as large as possible, but said proportion is naturally limited since it is necessary to achieve lattice conformity between the film and a substrate. Usually used as the substrate is neodymium•gallium•garnet $Nd_3Ga_5O_{12}$ (NGG) having a lattice constant of 12.509Å or calcium• magnesium• zirconium-substituted gadolinium•gallium•garnet $(CaGd)_3$ $(MgZrGa)_5O_{12}$ (SGGG) having a lattice constant of between 12.496Å and 12.530Å.

From the viewpoint mentioned above, x and y are defined as follows. That is, usually, x is in the range of $0.4 \leq x \leq 0.8$ and, preferably, in the range of $0.6 \leq x \leq 0.8$. Usually, y is in the range of $1.1 \leq y \leq 1.5$ and, preferably, in the range of $1.2 \leq y \leq 1.4$.

On the other hand, the properties required of a film represented by B in Figure 1 are that the sign of its Faraday rotation coefficient $(\theta_F)$ is plus, that the value is large and its temperature dependence is large. In order to meet these requirements, Gd-Bi iron garnet has been selected. Further, for the purpose of increasing the temperature dependence of the Faraday rotation coefficient, Ga is substituted in part of the iron. Namely, the composition of the film B is represented by $Gd_{3-v}Bi_vFe_{5-w}Ga_wO_{12}$.

The proportion of substituted bismuth is preferably as large as possible. However, said proportion is as limited relative to the lattice constant of a substrate as that of the film A since it is necessary to achieve lattice conformity between the film and the substrate. Meanwhile, the proportion w of substituted Ga has been determined by considering both the temperature dependence of Faraday rotation coefficient and the magnitude of Faraday rotation coefficient. That is, when w is small, the Faraday rotation coefficient is large, however, the temperature dependence of Faraday rotation coefficient is small. And when w is large, the temperature dependence of Faraday rotation coefficient is large, however, the Faraday rotation coefficient is small.

Accordingly, v is usually in the range of $0.6 \leq v \leq 1.1$ and, preferably, in the range of $0.6 \leq v \leq 0.9$. Usually w is in the range of $1.1 \leq w \leq 1.6$ and, preferably, in the range of $1.1 \leq w \leq 1.4$.

A film having a positive Faraday rotation angle and a film having a negative Faraday rotation angle are combined according to one of the following three methods. Any of these methods works equally with regard to the temperature dependence, and can be used in this invention.

1) A film having a positive or negative Faraday rotation angle is first grown on a nonmagnetic garnet substrate according to liquid phase epitaxy, and the remaining film is grown thereon.

2) A film having a positive or negative Faraday rotation angle is first grown on a nonmagnetic garnet substrate according to liquid phase epitaxy, and the remaining film is grown on the other side of the substrate.

3) A film having a positive or negative Faraday rotation angle is grown on a nonmagnetic garnet substrate according to liquid phase epitaxy, and the remaining film is grown in the same way on another nonmagnetic garnet substrate. And then the grown films are attached to each other. Desirably, the grown films are attached after the substrates are removed. That is because when the substrate remains, a Fresnel reflection, which degrades the quenching ratio, takes place in the interface between the substrate and the film.

It is a very simple method to attach a magnetic garnet film having a positive Faraday rotation angle and a mangetic garnet film having a negative Faraday rotation coefficient to each other by using an adhesive. However, when a Faraday rotator obtained as mentioned here is used in an optical isolator for optical communication and optical measurement which require low loss and high reliability, there are problems remaining with regard to light absorption of the adhesive per se, long-period stability of the adhesive, and the like. Therefore, in order to improve the thermal properties of Faraday rotation angle of magnetic garnet films, it is preferable to employ methods of forming a double epitaxial film or forming films on both surfaces of a substrate according to liquid phase epitaxy.

The liquid phase epitaxy is carried out, in general, in the following manner.

While a melt (of a flux component and a garnet material component) in a platinum crucible is maintained at a temperature of supersaturation (usually between 750°C and 850°C), a nonmagnetic garnet substrate is immersed in the melt to form magnetic garnet film as single crystals on the substrate.

Usually, a mixture of PbO, $B_2O_3$ and $Bi_2O_3$ is used as the flux component.

According to this invention, a Faraday rotator having a substantially constant Faraday rotation angle in the range between -20°C and 60°C, more strictly between 0°C and 50°C, can be obtained by combining magnetic garnet films having thicknesses of not more than 500µm which can be easily produced according to liquid phase expitaxy, one of which has a positive Faraday rotation angle and the other of which has a negative Faraday rotation angle.

EXAMPLES

This invention will be explained further in detail according to the following Examples, in which the Faraday rotation coefficients and Faraday rotation angles were measured as follows.

Method of measuring Faraday rotation coefficient:

Polarized light was directed to a garnet film, and a rotation angle of a polarized light plane was measured by rotating an analyzer. At this time, the garnet film was magnetically saturated by an external magnetic field to arrange the magnetism of the garnet in the direction of the external magnetic field. The rotation angle measured as mentioned above is a Faraday rotation angle ($\theta$), and the value obtained by dividing the Faraday rotation angle by the thickness of a garnet film is a Faraday rotation coefficient ($\theta_F$).

Method of measuring temperature dependence of Faraday rotation angle:

A garnet film was heated or cooled, and Faraday rotation angles were measured at temperatures after the heating or cooling.

EXAMPLE 1

One surface of a (111) SGGG substrate is kept in contact with the surface of a melt having a composition shown in Table 1 at 830°C for 14 hours to give a film of $Gd_{2.3}Bi_{0.7}Fe_{3.8}Ga_{1.2}O_{12}$ having a thickness of $230\mu m$ and exhibiting a mirror face. The compositional analysis was carried out by dissolving the film, from which the substrate was pre-removed, in a hot phosphoric acid and subjecting the resultant solution to plasma emission analysis.

The resultant film had a Faraday rotation coefficient of $+400$ deg/cm to light having a wavelength of $1.55\mu m$.

The above $Gd_{2.3}Bi_{0.7}Fe_{3.8}Ga_{1.2}O_{12}$ film was kept in contact with the surface of a melt having a composition shown in in Table 2 at 780°C for 22 hours to give a film of $Ho_{1.2}Tb_{0.6}Bi_{1.2}Fe_5O_{12}$ having a thickness of $480\mu m$ and exhibiting a mirror face. Consequently, the total film thickness of the combined $Gd_{2.3}Bi_{0.7}Fe_{3.8}Ga_{1.2}O_{12}$ and $Ho_{1.2}Tb_{0.6}Bi_{1.2}Fe_5O_{12}$ was $710\mu m$.

The compositional analysis of the $Ho_{1.2}Tb_{0.6}Bi_{1.2}Fe_5O_{12}$ was carried out by removing the substrate and the $Gd_{2.3}Bi_{0.7}Fe_{3.8}Ga_{1.2}O_{12}$ film, then dissolving the remaining $Ho_{1.2}Tb_{0.6}Bi_{1.2}Fe_5O_{12}$ film in a hot phosphoric acid and subjecting the resultant solution to plasma emission analysis. The Faraday rotation coefficient of this single crystal film was determined by similarly removing the substrate and the $Gd_{2.3}Bi_{0.7}Fe_{3.8}Ga_{1.2}O_{12}$ film, to show - 1,200 deg/cm to light having a wavelength of $1.55\mu m$.

Then, the surface of the $Ho_{1.2}Tb_{0.6}Bi_{1.2}Fe_5O_{12}$ film was lapped and polished by $28\mu m$ such that the Faraday rotation angle of this double epitaxial film became 45 degrees, and the change of its Faraday rotation angle depending on temperatures were measured to show $\Delta \theta = 0$ at temperatures between 0 and 50°C as shown in Figure 2, and the resultant film was excellent in the properties as a Faraday rotator. And at temperatures between -20°C and 60°C, the resultant film showed that $\Delta \theta$ was less than 0.5.

EXAMPLE 2

One surface of a (111) SGGG substrate was kept in contact with a melt having a composition shown in Table 1 at 830°C for 8 hours to give a $Gd_{2.3}Bi_{0.7}Fe_{3.8}Ga_{1.2}O_{12}$ film having a thickness of $160\mu m$ and exhibiting a mirror face. The film had a Faraday rotation coefficient of $+600$ deg/cm to light having a wavelength of $1.31\mu m$.

Similarly, one surface of a (111) SGGG substrate was kept in contact with a melt having a composition shown in Table 2 at 780°C for 12 hours to give a $Ho_{1.2}Tb_{0.6}Bi_{1.2}Fe_5O_{12}$ film having a thickness of $300\mu m$ and exhibiting a mirror face. This single crystal film had a Faraday rotation coefficient of -1,900 deg/cm to light having a wavelength of $1.31\mu m$.

Then, the substrates for the above films and residual melts on the film surfaces were removed by lapping and polishing, and as a result, a $Gd_{2.3}Bi_{0.7}Fe_{3.8}Ga_{1.2}O_{12}$ film having a thickness of $150\mu m$ and a $Ho_{1.2}Tb_{0.6}Bi_{1.2}Fe_5O_{12}$ film having a thickness of $285\mu m$ were obtained. These two films were attached to each other by using an epoxy-type adhesive, and the change of Faraday rotation angle of the resultant film depending on temperature was measured to show $\Delta \theta = 0$ at temperatures between 0°C and 50°C. Thus, the film obtained as mentioned above exhibited excellent properties as a magneto-optic material for an optical isolator.

Table 1

| Component | Mole% |
|---|---|
| PbO | 54.9 |
| $Bi_2O_3$ | 25.0 |
| $Fe_2O_3$ | 7.5 |
| $B_2O_3$ | 9.1 |
| $Ga_2O_3$ | 3.0 |
| $Gd_2O_3$ | 0.5 |

Table 2

| Component | Mole% |
|---|---|
| PbO | 54.4 |
| $Bi_2O_3$ | 24.7 |
| $Fe_2O_3$ | 11.5 |
| $B_2O_3$ | 9.0 |
| $Ho_2O_3$ | 0.33 |
| $Tb_4O_7$ | 0.07 |

## Claims

1. A Faraday rotator comprising:
   a film of a compound having a negative Faraday rotation angle and represented by formula (1)

   $$Ho_{3-x-y}Tb_xBi_yFe_5O_{12} \qquad (1)$$

   wherein x is in the range of $0.4 \leqq x \leqq 0.8$ and y is in the range of $1.1 \leqq y \leqq 1.5$
   and
   a film of a compound having a positive Faraday rotation angle and represented by formula (2)

   $$Gd_{3-v}Bi_vFe_{5-w}Ga_wO_{12} \qquad (2)$$

   wherein v is in the range of $0.6 \leqq v \leqq 1.1$ and w is in is in the range of $1.1 \leqq w \leqq 1.6$, the films being arranged such that said Faraday rotator has a substantially constant Faraday rotation angle in a predetermined temperature range owing to the counter action of the thermal dependencies of Faraday rotation angles of the two films.

2. A Faraday rotator according to claim 1 wherein x and y of the compound of formula (1) are in the ranges of $0.6 \leqq x \leqq 0.8$ and $1.2 \leqq y \leqq 1.4$,

3. A Faraday rotator according to claim 1 or 2 wherein v and w of the compound of formula (2) are in the ranges of $0.6 \leqq v \leqq 0.9$ and $1.1 \leqq w \leqq 1.4$, respectivley.

4. A Faraday rotator according to claim 1 2 or 3 wherein the film of the compound of formula (1) and the film of the compound of formula (2) are single crystal films grown on nonmagnetic garnet substrates by liquid phase epitaxy.

5. A Faraday rotator according to any of claims 1 to 4 formed by growing a film of the compound of formula (1) or (2) on one surface of a nonmagnetic garnet substrate by liquid phase epitaxy and growing, on said film, a film of the remaining compound by liquid phase epitaxy.

6. A Faraday rotator according to any of claims 1 to 4 formed by growing a film of the compound of formula (1) or (2) on one surface of a nonmagnetic garnet substrate by liquid phase epitaxy and growing a film of the remaining compound on the other surface of said substrate by liquid phase epitaxy.

7. A Faraday rotator according to any of claims 1 to 4 formed by growing a film of the compound of formula (1) on one surface of one nonmagnetic garnet substrate according to liquid phase epitaxy and a film of the compound of formula (2) on one surface of another nonmagnetic garnet substrate according to liquid phase epitaxy, and attaching the grown films to each other by using an adhesive.

8. A Faraday rotator according to any of claims 4 to 7 wherein the nonmagnetic garnet substrate is a {-$(CaGd)_3$ $(MgZrGa)_5O_{12}$} substrate having a lattice constant between 1.2496nm and 1.2530nm or a {$Nd_3Ga_5O_{12}$} substrate having a lattice constant of 1.2509nm.

EP 0 338 859 B1

9. A Faraday rotator according to claim 1 wherein the predetermined temperature range is between 0°C and 50°C.

## Patentansprüche

1. Faraday-Rotor mit:
einem Film aus einer Zusammensetzung mit einem negativen Faraday-Drehwinkel und dargestellt durch Formel (1)

$$HO_{3-x-y}Tb_xBi_yFe_5O_{12} \qquad (1)$$

wobei x im Bereich von $0,4 \leq x \leq 0,8$ und y im Bereich von $1,1 \leq y \leq 1,5$ ist,
und einem Film aus einer Zusammensetzung mit einem positiven Faraday-Drehwinkel und dargestellt durch Formel (2)

$$Gd_{3-v}Bi_vFe_{5-w}Ga_wO_{12} \qquad (2)$$

wobei v im Bereich von $0,6 \leq v \leq 1,1$ und w im Bereich von $1,1 \leq w \leq 1,6$ ist, wobei die Filme so angeordnet sind, daß der Faraday-Rotor einen im wesentlichen konstanten Faraday-Drehwinkel in einem vorbestimmten Temperaturbereich aufgrund der Gegenwirkung der Temperaturabhängigkeiten der Faraday-Drehwinkel der beiden Filme hat.

2. Faraday-Rotor nach Anspruch 1,
wobei x und y der Zusammensetzung von Formel (1) in den Bereichen von $0,6 \leq x \leq 0,8$ und $1,2 \leq y \leq 1,4$ sind.

3. Faraday-Rotor nach Anspruch 1 oder 2,
wobei v und w der Zusammensetzung von Formel (2) in den Bereichen $0,6 \leq v \leq 0,9$ und $1,1 \leq w \leq 1,4$ sind.

4. Faraday-Rotor nach Anspruch 1, 2 oder 3,
wobei der Film der Zusammensetzung von Formel (1) und der Film der Zusammensetzung von Formel (2) Einzel-Kristallfilme sind, die auf nicht-magnetischen Granatsubstraten durch Flüssigphasenepitaxie aufgewachsen sind.

5. Faraday-Rotor nach einem der Ansprüche 1 bis 4,
der durch Aufwachsen eines Films der Zusammensetzung von Formel (1) oder (2) auf einer Oberfläche eines nicht-magnetischen Granatsubstrates durch Flüssigphasenepitaxie und durch Aufwachsen eines Films der verbleibenden Zusammensetzung auf diesen Film durch Flüssigphasenepitaxie gebildet ist.

6. Faraday-Rotor nach einem der Ansprüche 1 bis 4,
der durch Aufwachsen eines Films der Zusammensetzung von Formel (1) oder (2) auf einer Oberfläche eines nicht-magnetischen Granatsubstrates durch Flüssigphasenepitaxie und durch Aufwachsen eines Films der verbleibenden Zusammensetzung auf der anderen Oberfläche des Substrates durch Flüssigphasenepitaxie gebildet ist.

7. Faraday-Rotor nach einem der Ansprüche 1 bis 4,
der durch Aufwachsen eines Films der Zusammensetzung von Formel (1) auf einer Oberfläche eines nicht-magnetischen Granatsubstrates durch Flüssigphasenepitaxie und eines Films der Zusammensetzung von Formel (2) auf einer Oberfläche eines anderen nicht-magnetischen Granatsubstrates durch Flüssigphasenexpitaxie, und durch Zusammenfügen der aufgewachsenen Filme aneinander durch Verwenden eines Klebstoffs gebildet ist.

8. Faraday-Rotor nach einem der Ansprüche 4 bis 7,
wobei das nicht-magnetische Granatsubstrat ein $\{(CaGd)_3 (MgZrGa)_5O_{12}\}$-Substrat mit einer Gitterkonstante zwischen 1,2496 nm und 1,2530 nm oder ein $\{Nd_3Ga_5O_{12}\}$-Substrat mit einer Gitterkonstante von 1,2509 nm ist.

7

**9.** Faraday-Rotor nach Anspruch 1,
bei dem der vorbestimmte Temperaturbereich zwischen 0 °C und 50 °C ist.

**Revendications**

**1.** Rotateur de Faraday comprenant:
- une pellicule d'un composé ayant un angle de rotation de Faraday négatif et représenté par la formule (1):

$$HO_{3-x-y}Tb_xBi_yFe_5O_{12} \qquad (1)$$

dans laquelle x se trouve dans la plage $0,4 \leq x \leq 0,8$ et y se trouve dans la plage $1,1 \leq y \leq 1,5$, et
- une pellicule d'un composé ayant un angle de rotation de Faraday positif et représenté par la formule (2):

$$Gd_{3-v}Bi_vFe_{5-w}Ga_wO_{12} \qquad (2)$$

dans laquelle v est dans la plage $0,6 \leq v \leq 1,1$ et w est dans la plage $1,1 \leq w \leq 1,6$,
les pellicules étant disposées de telle sorte que ledit rotateur de Faraday a un angle de rotation de Faraday sensiblement constant dans une plage de températures prédéterminée en raison de l'effet contraire des dépendances thermiques des angles de rotation de Faraday des deux pellicules.

**2.** Rotateur de Faraday selon la revendication 1, dans lequel x et y du composé de la formule (1) sont compris dans les plages $0,6 \leq x \leq 0,8$ et $1,2 \leq y \leq 1,4$.

**3.** Rotateur de Faraday selon la revendication 1 ou 2, dans lequel v et w du composé de la formule (2) sont respectivement compris dans les plages $0,6 \leq v \leq 0,9$ et $1,1 \leq w \leq 1,4$.

**4.** Rotateur de Faraday selon la revendication 1, 2 ou 3, dans lequel la pellicule de composé de formule (1) et la pellicule de composé de formule (2) sont des pellicules monocristallines que l'on a fait croître sur des substrats de grenat non magnétique par épitaxie en phase liquide.

**5.** Rotateur de Faraday selon l'une quelconque des revendications 1 à 4, formé par croissance d'une pellicule de composé de formule (1) ou (2) sur une surface d'un substrat en grenat non magnétique par épitaxie en phase liquide et croissance, sur ladite pellicule, d'une pellicule de l'autre composé par épitaxie en phase liquide.

**6.** Rotateur de Faraday selon l'une quelconque des revendications 1 à 4, formé par croissance d'une pellicule du composé de formule (1) ou (2) sur une surface d'un substrat en grenat non magnétique par épitaxie en phase liquide et croissance d'une pellicule de l'autre composé sur l'autre surface dudit substrat par épitaxie en phase liquide.

**7.** Rotateur de Faraday selon l'une quelconque des revendications 1 à 4, formé par croissance d'une pellicule du composé de formule (1) sur une surface d'un substrat en grenat non magnétique par épitaxie en phase liquide et d'une pellicule du composé de formule (2) sur une surface d'un autre substrat en grenat non magnétique par épitaxie en phase liquide, et fixation l'une à l'autre des pellicules que l'on a fait croître en utilisant une colle.

**8.** Rotateur de Faraday selon l'une quelconque des revendications 4 à 7, dans lequel le substrat en grenat non magnétique est un substrat $\{(CaGd)_3 (MgZrGa)_5O_{12}\}$, ayant une constante de réseau comprise entre 1,2496 nm et 1,2530 nm ou bien un substrat $\{Nd_3Ga_5O_{12}\}$ ayant une constante de réseau de 1,2509 nm.

**9.** Rotateur de Faraday selon la revendication 1, dans lequel la plage de températures prédéterminée est comprise entre 0 °C et 50 °C.

# FIG.1

# FIG.2